# EUROPÄISCHE PATENTSCHRIFT

(11) **EP 3 024 552 B1**
(45) Veröffentlichungstag und Bekanntmachung des Hinweises auf die Patenterteilung: **31.08.2022**
(21) Anmeldenummer: 14739182.5
(22) Anmeldetag: 16.07.2014
(51) Int. Cl.: A62C 2/06, A61C 3/00, E03C 1/28, E03F 5/04

(54) **ABLAUF**
DRAIN
ÉCOULEMENT

(30) Priorität: 23.07.2013 DE 102013107848
(43) Veröffentlichungstag der Anmeldung: 01.06.2016
(73) Patentinhaber: ACO Ahlmann SE & Co. KG, 24782 Büdelsdorf (DE)
(72) Erfinder: MACOUN, Petr, 582 23 Havlickova Borová (CZ)
(74) Vertreter: Bohnenberger, Johannes
(86) Internationale Anmeldenummer: PCT/EP2014/065222
(87) Internationale Veröffentlichungsnummer: WO 2015/010982

(56) Entgegenhaltungen:
- EP-A1- 1 640 518
- EP-A1- 1 640 518
- WO-A1-03/053524
- WO-A1-03/053524
- None

## Beschreibung

Die Erfindung betrifft einen Ablauf nach dem Oberbegriff des Patentanspruches 1, wobei dieser Ablauf eine Brandschutzvorrichtung aufweist.

Nach § 17 MBO müssen bauliche Anlagen so beschaffen sein, dass unter anderem einer Ausbreitung von Feuer und Rauch vorgebeugt wird. Bei Bodenläufen sind dabei bautechnische Maßnahmen in Form von Brandabschottungen vorgesehen. Diese tragen dafür Sorge, dass es im Brandfall zu keiner Ausbreitung von Feuer in benachbarte (z. B. übereinanderliegende) Brandabschnitte kommen kann.

Aus der EP 145 35 74 B2 ist ein Ablauf bekannt, bei dem die Brandschutzvorrichtung als Kartusche oder Hülse vorgesehen ist, welche einen nach unten, in Richtung eines Ablaufrohres ragenden Stutzen eines Geruchsverschlusses umschließt und im Brandfall durch Aufquellen zudrücken soll. Dann aber, wenn ein höherer Gasdruck oder aber länger andauernde große Hitze zu befürchten sind, kann es geschehen, dass bei dem bekannten Ablauf die Absperrung versagt.

Ein Ablauf nach dem Oberbegriff des Patentanspruches 1 ist beispielsweise aus EP 1 640 518 A1 bekannt. Der bekannte Ablauf nutzt ein Intumeszenzmaterial zum Verschluss eines Rohranschlusses des Ablaufs, wobei durch das sich im Brandfall ausdehnende Intumeszenzmaterial ein Verschlussstopfen in eine Einlauföffnung des Rohranschlusses, diesen verschließend, gedrückt wird. In dem Ablauftopf befindliche Fremdkörper können allerdings die Expansion des Intumszenzmaterials behindern. Ein sicherer Brandverschluss kann daher nicht vollständig gewährleistet werden.

Der Erfindung liegt die Aufgabe zu Grunde, einen Ablauf der eingangs genannten Art dahingehend weiterzubilden, dass in einfacher Weise eine erhöhte Sicherheit erzielbar ist.

Diese Aufgabe wird durch einen Ablauf nach Patentanspruch 1 gelöst.

Im Einzelnen wird diese Aufgabe durch einen Ablauf gelöst, der umfasst:
- einen Ablauftopf mit einem Anschluss, an den eine Abwasserleitung anschließbar ist,
- einen Geruchsverschluss, der einen Geruchsverschlussstutzen aufweist, welcher ein Oberende mit einer Einlauföffnung und eine untere Auslassöffnung aufweist, die in einen oben offenen Geruchsverschlusstopf ragt, der zur Ausbildung eines Geruchsverschlussreservoirs ausgebildet ist, und
- eine Brandschutzvorrichtung, zum Verschließen des Geruchsverschlusses im Brandfall mit Hilfe von Intumeszenzmaterial, wobei im Geruchsverschlusstopf ein Verschlussstopfen angeordnet und zwischen dem Verschlussstopfen und dem Geruchsverschlusstopf Intumeszenzmaterial derart vorgesehen sind, dass der Verschlussstopfen im Brandfall durch expandierendes Intumeszenzmaterial gegen die Auslauföffnung des Geruchsverschlussstutzens diese verschließend gedrückt wird.

Dadurch, dass ein Stopfen vorgesehen ist, der nur zum Verschließen einer Öffnung bewegt werden muss, kann in einfacher Weise ein dichteres Verschließen des Ablaufes bewerkstelligt werden, als dies bisher der Fall war.

Vorzugsweise sind der Geruchsverschlussstopfen und/oder der Geruchsverschlusstopf und/oder Geruchsverschlussstutzen, vorzugsweise alle drei Bauteile, aus unbrennbarem Material, vorzugsweise aus Edelstahl gefertigt. Dadurch ist eine sehr sichere und dauerhafte Abdichtung des Ablaufes zu bewerkstelligen.

Der Geruchsverschlussstutzen ist mit dem Geruchsverschlusstopf zum gemeinsamen Ein- und Ausbau in den Ablauftopf verbunden, so dass nur ein einziges Bauteil ein- und ausgebaut werden muss. Vorzugsweise wird diese Verbindung von Geruchsverschlussstutzen und Geruchsverschlusstopf über einen Handgriff bewerkstelligt, so dass kein gesondertes Bauteil zum Anfassen der Baugruppe benötigt wird.

Der Geruchsverschlussstutzen ist vorzugsweise im Ablauftopf über eine Dichtung abgedichtet gelagert, so dass Gerüche nicht aufsteigen können.

Am Oberende des Geruchsverschlussstutzens ist erfindungsgemäß eine ringförmige Anordnung von Intumeszenzmaterial vorgesehen, vorzugsweise derart, dass im Brandfall das expandierende Intumeszenzmaterial den Geruchsverschlussstutzen gegenüber dem Ablauftopf und/oder den Geruchsverschlusstopf gegenüber dem Ablauftopf und/oder den Geruchsverschlussstutzen gegenüber dem Geruchsverschlusstopf abdichtet bzw. fixiert. Vorzugsweise bilden also alle drei wesentlichen Bauteile des Ablaufes nach Expandieren der ringförmigen Anordnung aus Intumeszenzmaterial eine einzige über das Intumeszenzmaterial verbundene Einheit, sozusagen einen großen Stöpsel, der in der Boden- bzw. Deckenöffnung sitzt und diese abschließt, welche den Ablauf aufnimmt. Erfindungsgemäß ist bei der Erfindung vorgesehen, dass die ringförmige Anordnung aus Intumeszenzmaterial zur Abdichtung und/oder Fixierung des Geruchsverschlussstutzens gegenüber dem Ablauftopf ausgebildet ist. Es muss somit kein gesondertes Dichtmaterial (ein entsprechend geformter Gummiring oder dergleichen) vorgesehen werden, wenn hinreichend elastisches Intumeszenzmaterial verwendet wird. Damit erfüllt also die beschriebene ringförmige Anordnung aus Intumeszenzmaterial zwei verschiedene Funktionen, einmal eine Dicht- und Haltefunktion für den Geruchsverschlussstutzen im Ablauftopf und zum anderen eine Brandsicherung.

Der Verschlussstopfen ist vorzugsweise als plattenförmiger Kolben ausgebildet und im entsprechend zylinderförmig ausgebildeten Geruchsverschlusstopf gelagert. Dadurch kann eine sehr hohe Kraft durch das Intumeszenzmaterial erzeugt werden, mit welcher der Verschlussstopfen auf die Auslauföffnung des Geruchsverschlussstutzens gedrückt wird und diesen abschließt. Dies erhöht die Sicherheit.

Vorzugsweise weist der Verschlussstopfen eine mittige Auswölbung auf, die im Normalfall in die untere Auslassöffnung des Geruchsverschlussstutzens ragt. Dadurch kann einerseits eine strömungsgünstige Anordnung für das abfließende Abwasser sichergestellt werden, andererseits wird hierdurch ein größerer Hohlraum geschaffen, der mit Intumeszenzmaterial befüllt wird, ohne dass dadurch die Gesamtanordnung in ihrer Baugröße steigt.

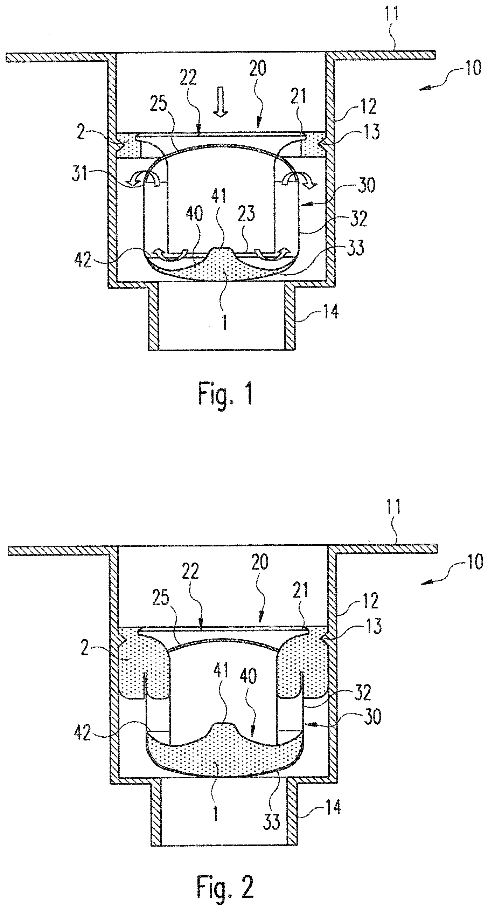

Nachfolgend wird eine bevorzugte Ausführungsform der Erfindung anhand der Fig. 1 und 2 beschrieben. Hierbei zeigen
- Fig. 1: einen schematisierten Längsschnitt durch eine Ausführungsform der Erfindung, wobei das Intumeszenzmaterial sich im Normalzustand, also im nicht-expandierten Zustand befindet, und
- Fig. 2: die Anordnung nach Fig. 1, wobei die Intumeszenzmasse expandiert ist.

In der nachfolgenden Beschreibung werden für gleiche und gleich wirkende Teile dieselben Bezugsziffern verwendet.

Wie in Fig. 1 gezeigt, umfasst die hier gezeigte Ausführungsform des erfindungsgemäßen Ablaufes einen Ablauftopf 10, der in eine Ausnehmung (Kernbohrung) einer Geschoßdecke einsetzbar ist. Der Ablauftopf 10 weist einen oberen Flansch 11 auf, mit welchem er auf der Oberfläche der Geschoßdecke aufliegt. Entsprechende Abdichtvorrichtungen sind selbstverständlich vorgesehen.

Der Ablauftopf 10 weist anschließend an den Flansch 11 einen zylindrischen Abschnitt 12 auf, der an seiner Unterseite ein Anschluss-Spitzende 14 trägt, an welches eine Rohrleitung angeschlossen werden kann.

Weiterhin weist der zylindrische Abschnitt 12 des Ablauftopfes 10 einen Dichtungssitz 13 auf, der als umlaufende Wulst im Inneren des Ablauftopfes 10 vorgesehen ist.

Im Ablauftopf 10 steckt ein Geruchsverschlussstutzen 20, dessen Oberende 21 in einer Dichtung aus oberem Intumeszenzmaterial 2 festgehalten ist. Der Geruchsverschlussstutzen 20 verjüngt sich an seinem Oberende 21 mit einer dort vorgesehenen Einlauföffnung 22 und geht in einen zylindrischen Abschnitt nach unten über, der in einer Auslauföffnung 23 endet.

Weiterhin ist ein Geruchsverschlusstopf 30 vorgesehen, in dessen Inneres der Geruchsverschlussstutzen 20 mit seiner Auslauföffnung 23 ragt. Der Geruchsverschlusstopf weist einen Boden 33 auf, der nach oben in einen zylindrischen Abschnitt 32 übergeht, der mit seinem Oberrand 31 relativ knapp unter dem Oberende 21 des Geruchsverschlussstutzens 20 endet.

Es ist ein Griff 25 vorgesehen, der als gebogener Stab ausgebildet sein kann, dessen Enden einerseits am Oberrand 31 des Geruchsverschlusstopfes 30 befestigt (z.B. angeschweißt) sind und der in seinem mittleren Abschnitt durch die Wände des Geruchsverschlussstutzens 20 geführt und dort verschweißt ist. Dadurch wird der Geruchsverschlusstopf 30 am Geruchsverschlussstutzen 20 durch den Griff 25 gehalten, so dass die beiden Bauteile bei Ergreifen des Griffes 25 miteinander aus dem Ablauftopf 10 herausgehoben werden können.

Im unteren Bereich des Geruchsverschlusstopfes 30 befindet sich ein Verschlussstopfen 40, dessen Rand 42 relativ eng am zylindrischen Abschnitt 32 des Geruchsverschlusstopfes 30 anliegt. Der Verschlussstopfen 40 weist eine nach oben ragende Auswölbung 41 auf, so dass ein Hohlraum zwischen dem Verschlussstopfen 40 und dem Boden 33 des Geruchsverschlusstopfes 30 gebildet ist. Dieser Hohlraum ist durch eine untere Intumeszenzmasse 1 gefüllt.

Durch die Auswölbung des Verschlussstopfens 40 ergibt sich eine günstigere Flüssigkeitsströmung durch den Ablauftopf, wie sie in Fig. 1 mit Pfeilen angedeutet ist.

Im Brandfall quellen die Intumeszenzmassen 1 und 2 auf. Dies führt einerseits dazu, dass - wie in Fig. 2 gezeigt - der Verschlussstopfen 40 hochgehoben wird und die Auslassöffnung 23 des Geruchsverschlussstutzens 20 verschließt. Da die hier genannten Bauteile, insbesondere der Geruchsverschlussstutzen 20, der Geruchsverschlusstopf 30 und der Verschlussstopfen 40 vorzugsweise aus Edelstahl gefertigt sind, entsteht somit ein dichter und haltbarer Abschluss des Geruchsverschlussstutzens.

Durch die Erwärmung expandiert auch die obere Intumeszenzmasse 2, welche den Geruchsverschlussstutzen 20 im Ablauftopf 10 bzw. dessen Dichtungssitz 13 abdichtend hält. Durch das Aufquellen breitet sich die Intumeszenzmasse 2 wie in Fig. 2 gezeigt nach unten aus und füllt einen Teil des Hohlraumes zwischen dem Geruchsverschlusstopf 30 und dem Geruchsverschluss 20 sowie zwischen dem Geruchsverschlusstopf 30 und dem Inneren des Ablauftopfes 10. Dadurch wird die Gesamtanordnung fest im Ablauftopf gehalten und sperrt diesen gegenüber der Strömung heißer Gase vollständig ab. Weiterhin ergibt sich hieraus eine noch festere Verbindung zwischen dem Geruchsverschlussstutzen 20 und dem Ablauftopf 10, als dies durch die Intumeszenzmasse 2 in Fig. 1 (im Normalzustand) bewerkstelligt wird, was die Gesamtsicherheit der Anordnung weiter erhöht.

### Bezugszeichenliste

- 1: Untere Intumeszenzmasse
- 2: Obere Intumeszenzmasse
- 10: Ablauftopf
- 11: Flansch
- 12: Zylindrischer Abschnitt
- 13: Dichtungssitz
- 14: Anschluss-Spitzende
- 20: Geruchsverschlussstutzen
- 21: Oberende
- 22: Einlauföffnung
- 23: Auslauföffnung
- 25: Griff
- 30: Geruchsverschlusstopf
- 31: Oberrand
- 32: Zylindrischer Abschnitt
- 33: Boden
- 40: Verschlussstopfen
- 41: Auswölbung
- 42: Rand

## Patentansprüche

1. Ablauf, umfassend:
- einen Ablauftopf (10) mit einem Anschluss (14), an den eine Abwasserleitung anschließbar ist,
- einen Geruchsverschluss, der einen Geruchsverschlussstutzen (20) aufweist, welcher ein Oberende (21) mit einer Einlauföffnung (22) und eine untere Auslassöffnung (23) aufweist, die in einen oben offenen Geruchsverschlusstopf (30) ragt, der zur Ausbildung eines Geruchsverschlussreservoirs ausgebildet ist, und
- eine Brandschutzvorrichtung zum Verschließen des Geruchsverschlusses im Brandfall mit Hilfe von Intumeszenzmaterial,
wobei im Geruchsverschlusstopf (30) ein Verschlussstopfen (40) angeordnet ist,
wobei
zwischen dem Verschlussstopfen (40) und dem Geruchsverschlusstopf (30) Intumeszenzmaterial (1) derart vorgesehen ist, dass der Verschlussstopfen (40) im Brandfall durch expandierendes Intumeszenzmaterial (1) gegen die Auslauföffnung (23) des Geruchsverschlussstutzens (20), diese verschließend gedrückt wird,
**dadurch gekennzeichnet, dass**
am Oberende (21) des Geruchsverschlussstutzens (20) eine ringförmige Anordnung von Intumeszenzmaterial (2) zur Abdichtung und/oder
Fixierung des Geruchsverschlussstutzens (20) gegenüber dem Ablauftopf (10) vorgesehen ist.

2. Ablauf nach Anspruch 1,
**dadurch gekennzeichnet, dass**
der Geruchsverschlussstopfen (40) und/oder der Geruchsverschlusstopf (30) und/oder der Geruchsverschlussstutzen (20) aus unbrennbarem Material, vorzugsweise aus Edelstahl gefertigt ist/sind.

3. Ablauf nach einem der vorhergehenden Ansprüche,
**dadurch gekennzeichnet, dass**
der Geruchsverschlussstutzen (20) mit dem Geruchsverschlusstopf (30) zum gemeinsamen Ein- oder Ausbau in dem Ablauftopf (10) verbunden sind.

4. Ablauf nach einem der vorhergehenden Ansprüche,
**dadurch gekennzeichnet, dass**
der Geruchsverschlussstutzen (20) mit dem Geruchsverschlusstopf (30) über einen Handgriff (25) verbunden ist.

5. Ablauf nach einem der vorhergehenden Ansprüche,
**dadurch gekennzeichnet, dass**
der Geruchsverschlussstutzen (20) im Ablauftopf (10) über eine Dichtung (2) abgedichtet gelagert ist.

6. Ablauf nach einem der vorhergehenden Ansprüche,
**dadurch gekennzeichnet, dass**
die ringförmige Anordnung von Intumeszenzmaterial (2) derart vorgesehen ist, dass im Brandfall das expandierende Intumeszenzmaterial (2) den Geruchsverschlussstutzen (20) gegenüber dem Ablauftopf (10) und/oder den Geruchsverschlusstopf (30) gegenüber dem Ablauftopf (10) und/oder den Geruchsverschlussstutzen (20) gegenüber dem Geruchsverschlusstopf (30) abdichtet und/oder fixiert.

7. Ablauf nach einem der vorhergehenden Ansprüche,
**dadurch gekennzeichnet, dass**
der Verschlussstopfen (40) als vorzugsweise plattenförmiger Kolben ausgebildet ist und im entsprechend zylinderförmig ausgebildeten Geruchsverschlusstopf (30) sitzt.

8. Ablauf nach einem der vorhergehenden Ansprüche,
**dadurch gekennzeichnet, dass**
der Verschlussstopfen (40) eine mittige Auswölbung (41) umfasst, die mit Intumeszenzmaterial (1) gefüllt ist und im Normalfall in die untere Auslauföffnung (23) des Geruchsverschlussstutzens (20) ragt.

## Claims

1. A drain, comprising:
- a drain pot (10) having a connection (14) to which a waste water line is connectable,
- an odour trap including an odour trap nozzle (20) which includes an upper end (21) having an inlet opening (22) and a lower outlet opening (23) which protrudes into an odour trap pot (30) that is open at the top and is formed for forming an odour trap reservoir, and
- a fire protection device for closing the odour trap in case of fire by means of intumescence material,
wherein a closing plug (40) is disposed within the odour trap pot (30),
wherein intumescence material (1) is provided between the closing plug (40) and the odour trap pot (30) such that in case of fire the closing plug (40) is pressed against and closes the outlet opening (23) of the odour trap nozzle (20) by expanding intumescence material (1),
**characterized in that** at the upper end (21) of the odour trap nozzle (20), an annular arrangement of intumescence material (2) is provided for sealing and/or fixing the odour trap nozzle (20) relative to the drain pot (10).

2. The drain according to claim 1,
**characterized in that**
the odour closing plug (40) and/or the odour trap pot (30) and/or the odour trap nozzle (20) is/are made of an incombustible material, preferably of stainless steel.

3. The drain according to any one of the preceding claims,
**characterized in that**
the odour trap nozzle (20) and the odour trap pot (30) are connected with one another for being commonly installed in or deinstalled from the drain pot (10).

4. The drain according to any one of the preceding claims,
**characterized in that**
the odour trap nozzle (20) is connected with the odour trap pot (30) via a handle (25).

5. The drain according to any one of the preceding claims,
**characterized in that**
the odour trap nozzle (20) is mounted within the drain pot (10) so as to be sealed via a seal (2).

6. The drain according to any one of the preceding claims,
**characterized in that**
the annular arrangement of intumescence material (2) is provided such that in case of fire the expanding intumescence material (2) seals and/or fixes the odour trap nozzle (20) relative to the drain pot (10) and/or the odour trap pot (30) relative to the drain pot (10) and/or the odour trap nozzle (20) relative to the odour trap pot (30).

7. The drain according to any one of the preceding claims,
**characterized in that**
the closing plug (40) is formed as a preferably plate-shaped piston and is located within the odour trap pot (30) that is formed to be correspondingly cylinder-shaped.

8. The drain according to any one of the preceding claims,
**characterized in that**
the closing plug (40) comprises a central bulge (41) which is filled with intumescence material (1) and protrudes in the normal case into the lower outlet opening (23) of the odour trap nozzle (20).

## Revendications

1. Écoulement, comprenant :
- un pot d'écoulement (10) présentant un raccord (14) auquel une conduite d'eaux usées peut être raccordée,
- un siphon qui présente une tubulure de siphon (20), laquelle présente une extrémité supérieure (21) pourvue d'une ouverture d'entrée (22) et une ouverture de sortie (23) inférieure qui dépasse dans un pot de siphon (30) ouvert vers le haut qui est constitué pour constituer un réservoir de siphon, et
- un dispositif de protection incendie destiné à obturer le siphon en cas d'incendie à l'aide de matériau intumescent,
sachant qu'un bouchon d'obturation (40) est disposé dans le pot de siphon (30),
sachant que du matériau intumescent (1) est prévu entre le bouchon d'obturation (40) et le pot de siphon (30) de telle manière que le bouchon d'obturation (40) soit appuyé en cas d'incendie par du matériau intumescent (1) en expansion contre l'ouverture de sortie (23) de la tubulure de siphon (20) en obturant celle-ci,
**caractérisé en ce qu'**un agencement annulaire de matériau intumescent (2) est prévu à l'extrémité supérieure (21) de la tubulure de siphon (20) pour étanchéifier et/ou fixer la tubulure de siphon (20) par rapport au pot d'écoulement (10).

2. Écoulement selon la revendication 1,
**caractérisé en ce que**
le bouchon d'obturation (40) et/ou le pot de siphon (30) et/ou la tubulure de siphon (20) est/sont fabriqué/s en matériau ininflammable, de préférence en acier inoxydable.

3. Écoulement selon l'une des revendications précédentes,
**caractérisé en ce que**
la tubulure de siphon (20) est reliée au pot de siphon (30) pour le montage ou démontage commun dans le pot d'écoulement (10).

4. Écoulement selon l'une des revendications précédentes,
**caractérisé en ce que**
la tubulure de siphon (20) est reliée au pot de siphon (30) via une poignée (25).

5. Écoulement selon l'une des revendications précédentes,
**caractérisé en ce que**
la tubulure de siphon (20) est logée dans le pot d'écoulement (10) en étant étanchéifiée par un joint d'étanchéité (2).

6. Écoulement selon l'une des revendications précédentes,
**caractérisé en ce que**
l'agencement annulaire de matériau intumescent (2) est prévu de telle manière qu'en cas d'incendie, le matériau intumescent (2) en expansion étanchéifie et/ou fixe la tubulure de siphon (20) par rapport au pot d'écoulement (10) et/ou le pot de siphon (30) par rapport au pot d'écoulement (10) et/ou la tubulure de siphon (20) par rapport au pot de siphon (30).

7. Écoulement selon l'une des revendications précédentes,
**caractérisé en ce que**
le bouchon d'obturation (40) est constitué comme piston de préférence en forme de plaque et est logé dans le pot de siphon (30) constitué en forme de cylindre correspondante.

8. Écoulement selon l'une des revendications précédentes,
**caractérisé en ce que**
le bouchon d'obturation (40) comprend un bombement (41) central qui est rempli de matériau intumescent (1) et dépasse en cas normal dans l'ouverture de sortie (23) inférieure de la tubulure de siphon (20).
